# EUROPEAN PATENT SPECIFICATION

(11) **EP 4 644 349 B1**
(45) Date of publication and mention of the grant of the patent: **11.11.2026**
(21) Application number: 24290016.5
(22) Date of filing: 29.04.2024
(51) Int. Cl.: C04B 7/47

(54) **METHOD OF ACTIVATING A CALCIUM SILICATE MINERAL TO PRODUCE A REACTIVE MATERIAL IN A CEMENT MANUFACTURING PLANT**
VERFAHREN ZUR AKTIVIERUNG EINES CALCIUMSILIKATMINERALS UM EIN REAKTIVES MATERIAL IN EINER ZEMENTHERSTELLUNGSANLAGE HERZUSTELLEN
PROCÉDÉ D'ACTIVATION D'UN MINÉRAL DE SILICATE DE CALCIUM POUR PRODUIRE UN MATÉRIAU RÉACTIF DANS UNE USINE DE FABRICATION DE CIMENT

(43) Date of publication of application: 05.11.2025
(73) Proprietor: Holcim Technology Ltd, 6300 Zug (CH)
(72) Inventor: BENARD, Philippe, 38070 Saint-Quentin-Fallavier (FR); BERMEJO, Edelio, 38070 Saint-Quentin-Fallavier (FR); DION, Pascal, 38070 Saint-Quentin-Fallavier (FR)
(74) Representative: SONN Patentanwälte GmbH & Co KG

(56) References cited:
- EP-A1- 4 194 417
- US-A1- 2015 053 118

## Description

The invention refers to a method of activating a calcium silicate mineral to produce a reactive material in a cement manufacturing plant.

Further, the invention refers to a method of producing a composite cement containing cement clinker and a reactive material in a cement manufacturing plant.

Various types of mineral components may be added to Portland cement in order to obtain composite cements. In particular, it has become common practice to use pozzolanic and/or latent hydraulic material as supplementary cementitious materials in Portland cement mixtures.

By substituting supplementary cementitious materials for Portland cement the specific emission of CO₂ in the production of cement will be reduced. During the production of Portland cement clinker a considerable amount of CO₂ per ton of Portland cement clinker is emitted by the decarbonation of the raw materials and from the oxidation of the fuels that occur during calcination of the raw materials in rotary kilns.

Supplementary cementitious materials comprise a broad class of siliceous or siliceous and aluminous materials which, in finely divided form and in the presence of water, chemically react with calcium hydroxide at ordinary temperature to form compounds possessing cementitious properties. Examples of supplementary cementitious materials include granulated blast-furnace slag, fly ash, natural and calcined pozzolans, burnt oil shale, or concrete demolition waste, recycled concrete fines as defined in the standard NF EN 197-5:2021.

Cement is a product that in most cases is used in locations relatively close to where it is manufactured. Therefore, in case of composite cements, its production requires the availability of a source of a supplementary cementitious material, this source being either natural or synthetic. However, the local availability of such source is not guaranteed in all regions where cement is produced, mainly because of the decreasing availability of some synthetic sources of supplementary cementitious materials. Synthetic supplementary cementitious materials are in most cases a byproduct of various industrial processes, such as fly ash from coal-fired power plants or blast-furnace slag from steel mills. The decreasing supply of fly ash from the power industry is encouraging the search for new sources of supplementary cementitious materials for the cement and concrete production.

Therefore, increasing efforts are undertaken to use widely available sources for producing supplementary cementitious materials, such as concrete demolition waste.

It is known that calcium silicates can be activated thermally. From "Recycled cement"; Junjie Wang, Mulan Mu, Yongliang Liu, Construction and Building Materials, Volume 190, 30 November 2018, Pages 1124-1132 it is known that recycling of cement, a calcium silicate mineral, can reduce the environmental impact caused by the landfills of concrete demolition materials and the demand for raw materials for producing cement because the waste cement paste in demolished concrete could be used to produce recycled cement. Recycled cement was produced through burning a 2-year-old waste cement paste at 4 different temperatures (120°C, 450°C, 750°C and 1150°C) and then grinding into powder. The temperatures selected were those at which there was significant weight loss based on the thermogravimetric analysis (TGA) result of the old cement paste. The results show that the highest compressive strength occurred at 450°C and the recycled cement paste had a strength similar to that of OPC paste but with a poor workability which was even beyond the measurement range of a rheometer. Increasing the particle size of the recycled cement powder and partially replacing the cement powder with ground granulated blast-furnace slag (GGBS) were found to be able to effectively improve the workability of the recycled cement paste and at same time without reducing the resulting compressive strength.

There is a need to provide methods of activating a calcium silicate material that are viable at an industrial scale. This means that such industrial methods need to be efficient from a thermal energy consumption standpoint, enabling continuous and controlled production of activated calcium silicates in large amounts.

The object of the present invention is thus to provide a method of thermally activating calcium silicate minerals.

WO 2022/106966 A1 discloses a method, which comprises adding raw clay, an alumino-silicate mineral, into a clinker cooler to obtain a calcined clay cement. Such a method has several advantages as it enables the production of calcined clays without the need of building and operating a dedicated device for the calcination of clays. Furthermore, the method takes advantage of the heat in the clinker that is coming out of the rotary kiln where the clinker is produced, to then calcine the clay, meaning that clay is calcined without needing an additional source of heat.

However, introducing raw clay into a clinker cooler tends to generate large amounts of dust. This dust can circulate back to the cement kiln, leading to the following concerns: it can contaminate the clinker, thereby affecting the clinker's quality and performance; it can decrease the proportion of calcined clay present in the final cement products; it reduces the flame temperature in the kiln due to additional dust in the secondary air; and it increases the specific heat consumption caused by the thermal energy absorption of the minerals material into the rotary kiln. Additionally, the calcination process as described lacks precise control. This lack of control can lead to scenarios where the minerals are either overburnt or not sufficiently calcined, which ultimately compromises the reactivity of the resulting cementitious material.

EP194417A1 discloses a method for manufacturing a composite cement comprising the steps providing a cement raw meal, preheating, precalcination, sintering and cooling the cement clinker in a cooler wherein a zeolite is added with a gas tight valve to the clinker in the cooler at a position where the temperature of the clinker causes a heating of the added zeolite to a temperature in the range from 600 to 800 °C to activate the zeolite.

In order to solve this object, the invention provides a method of producing a reactive material in a cement manufacturing plant comprising a cement kiln and a clinker cooler, a head region of the clinker cooler being connected to an outlet end of the cement kiln for cooling cement clinker coming from the cement kiln, the method comprising:
- providing a calcium silicate mineral material susceptible of becoming reactive upon thermal treatment,
- introducing the calcium silicate mineral material into the clinker cooler and thermally activating the calcium silicate mineral material in the clinker cooler at a temperature of 600-900°C, in order to obtain said reactive material.

Tus, the invention is based on the idea to use the sensible heat of the hot clinker coming from the cement kiln in order thermally activate the calcium silicate mineral material.

The clinker cooler comprises a recuperation zone adjacent the outlet end, in which incoming cooling air is heated by the cement clinker and heated cooling air is fed into the cement kiln via the head region as secondary air and/or used as tertiary air, and a cooling zone remote from the outlet end, in which incoming cooling air is used to cool the cement clinker and exhaust air is released from the clinker cooler through an exhaust duct, and the calcium silicate mineral material is introduced into the cooling zone of the clinker cooler and thermally activated in the cooling zone.

The invention is based on the idea to introduce the calcium silicate mineral material into the cooling zone of the clinker cooler, rather than the recuperation zone, which significantly reduces the circulation of dust back to the cement kiln due to the differences in air flow between these two zones. In the recuperation zone, which is located closer to the outlet end of the cement kiln, the primary objective is to heat the incoming cooling air by direct contact with the hot cement clinker. This heated air is then channeled back into the cement kiln as secondary air or used as tertiary air. Due to the direction and purpose of the air flow in this zone - to capture heat and carry it back to the kiln - the potential for entraining fine particles and dust from added materials is significantly higher. If the calcium silicate mineral material were added in this zone, the vigorous air flow designed to maximize heat recuperation could easily pick up and transport dust particles back to the kiln, leading to contamination issues and a reduction in the quality of the activated material in the cement.

On the other hand, the cooling zone, situated further from the kiln's outlet end, employs incoming cooling air primarily to lower the temperature of the cement clinker. The air flow in this zone is designed to cool the clinker and then exit through an exhaust duct, rather than being recirculated back into the kiln. By introducing the calcium silicate mineral material into this zone, the potential for dust to be picked up by the air flow and transported back to the kiln is minimized. The air flow here is not directed towards the kiln but towards the exhaust system, which means any dust generated during the thermal treatment of the calcium silicate material is more likely to be contained within the cooler and then safely expelled through the exhaust system, where a filter may be arranged to capture the suspended particles in the airflow.

The cooling zone of the clinker cooler is usually characterized by the so-called zero point of the clinker cooler. The zero point of a cooler is defined as the point in the cooler beyond which no gas flows back to the kiln. It is easily determined by the skilled person by air flow measurements, and is the point where the temperature of the clinker is optimal for the thermal treatment of the calcium silicate mineral material.

An additional effect of the invention is that, by introducing the calcium silicate mineral material into the cooling zone, in particular at an upstream end region of the cooling zone, where the zero point is located, the calcium silicate mineral material can be thermally treated at a temperature of 600-900°C, in order to obtain the reactive material. At the zero point of a clinker cooler, the clinker is typically at a temperature comprised between 600°C and 900°C. Thermally activating the calcium silicate mineral material at a temperature of 600-900°C means that the material is heated to a temperature of 600-900°C, i.e. to a temperature of at least 600°C and not above 900°C.

By reaching the specific temperature range of 600°C to 900°C, the desired mineralogical change in the calcium silicate mineral material can be obtained that is characteristic of the mineralogical composition of the material. This change can develop a material that is reactive in a cement or concrete composition. If the specific activation temperature range of the calcium silicate mineral material is surpassed, over-burning takes place and crystallization of the silica phase occurs, resulting in a reduction of the reactivity of the material.

As used herein, the reactivity of the reactive material refers to the ability of the material to react with the hydration products of cement to form additional binding compounds and contribute to the development of compressive strength of the cement and it preferably refers to the pozzolanic and/or hydraulic reactivity of the material.

In the recuperation zone of a clinker cooler, the finer particles of the material would be transported back into the cement kiln by the air flow necessary to recover thermal energy from the clinker in order to achieve a lower specific heat consumption. Particles that are recirculated into the cement kiln reach temperatures as high as 1450°C, which results in the undesired effect of overburning the calcium silicate mineral material, as described above.

In order to safely achieve the desired thermal activation of the calcium silicate mineral material, the method of the invention preferably comprises an initial step of selecting a calcium silicate mineral material that activates its pozzolanic activity within a temperature range of 600-900°C, preferably 600-700°C. Said selection process preferably comprises the steps of:
a) Chemical XRF analysis of the available calcium silicate mineral material,
b) Activation of the material at different temperatures from 500°C to 900°C in progressive steps of, e.g., 100°C,
c) Activity analysis, preferably pozzolanic reactivity analysis of the material at each temperature,
d) Selection of the material the activity, prefarably pozzolanic reactivity, of which matches or surpasses the functional properties of the cement clinker.

The step of thermally activating the calcium silicate mineral material in the clinker cooler preferably comprises contacting the calcium silicate mineral material with the cement clinker that is transported through the cooling zone of the clinker cooler.

Thus, the invention uses waste energy from the cooling of the clinker to thermally activate the mineralogical phases of the calcium silicate mineral material that would otherwise have to be produced in a standalone process with an additional thermal power input to achieve the same temperature conditions as described herein.

According to a preferred embodiment of the method of the invention, the calcium silicate mineral material is introduced into the clinker cooler, preferably the cooling zone, at a vertical distance of 10-20 cm above a bed of cement clinker being conveyed through the clinker cooler. This avoids the suspension of the calcium silicate mineral material into the air flow.

According to a preferred embodiment of the invention, the clinker cooler is designed as a grate cooler. The structure of a grate cooler is essentially a horizontal, moving grate by means of which cement clinker travels from the kiln's outlet end to the cooler's discharge end. Cooling air is blown through the grate from beneath, passing through the hot clinker and facilitating heat exchange. This process not only cools the clinker but also heats the cooling air. Cooling air is typically blown into the clinker cooler from below by means of a plurality of cooling fans that are distributed over the length of the cooler, i.e. in the conveying direction of the grate(s). This allows for separate fans for the recuperation zone and for the cooling zone of the clinker cooler.

Preferably, the clinker cooler is designed as a single-chamber cooler and the calcium silicate mineral material is introduced into the clinker cooler at the zero point of the clinker cooler.

Alternatively, the clinker cooler may comprise two or more consecutive cooling chambers and the calcium silicate mineral material is introduced into a second cooling chamber arranged downstream of a first cooling chamber, wherein the calcium silicate mineral material is preferably introduced at an upstream end of the second cooling chamber. The at least two cooling chambers allow for a two-stage cooling process, wherein the two stages are typically physically separated, each designed for specific cooling and heat recovery tasks within the overall clinker cooling process. In particular, the first cooling chamber houses the recuperation zone and the second chamber houses the cooling zone of the clinker cooler. A physical separation of the two stages may be realized by, e.g., separating walls, which help to control the flow of clinker and cooling air between the stages, ensuring that the cooling air in each stage can be managed independently. In particular, the physical separation is designed to allow the clinker to transit from the first stage to the second stage, while keeping the flow of cooling air separate.

According to a preferred embodiment of the invention, the calcium silicate mineral material is introduced into the clinker cooler, preferably the cooling zone, by means of an air-tight dosing system. The air-tight dosing system ensures that the exact required amount of calcium silicate mineral material is introduced into the clinker cooler, thereby eliminating the risk of atmospheric contamination and preventing the escape of fine particulate matter into the surrounding environment.

Preferably, the calcium silicate mineral material is introduced into the clinker cooler, preferably the cooling zone, at a dosing rate of 0.05-20 wt.-%, preferably 1-10 wt.- %, of the cement clinker. This ensures an optimal ratio of cement clinker to reactive material in the final product, and achieves a balance that maximizes the reactivity of the reactive material without compromising the performance of the final product.

In preferred embodiment, the calcium silicate mineral material is charged onto a bed of cement clinker in the clinker cooler in a continuous manner, preferably by means of a rotary valve or a feeding screw. Rotary valves or feeding screws have the advantage of providing a more continuous supply of material on the hot clinker bed. On the contrary, a feeding device that makes use of a double-inlet valve is not preferred as it delivers materials in a non-continuous manner, resulting in varying thicknesses of calcium silicate mineral material on the hot clinker, which then does not allow for a homogeneous calcination of the material. In an even more preferred embodiment, the material is discharged onto the hot clinker bed in the clinker cooler by means that do not include a double-inlet valve.

Preferably, a first temperature of the cement clinker is measured upstream of the cooling zone and a second temperature of the cement clinker is measured at a discharge end of the clinker cooler and a feeding rate of the calcium silicate mineral material introduced into the clinker cooler is controlled as a function of said first and second temperature so that the calcium silicate mineral material is heated to a temperature of at least 600°C and not above 900°C. Preferably, the first temperature is measured at the inlet of the clinker cooler. By correlating the feeding rate with real-time temperature readings of the clinker, the method improves the efficiency of the heat exchange process, optimizing the use of residual thermal energy from the clinker for the thermal activation of the mineral material.

The suitable particle size for the calcium silicate material in the process may be selected according to the circumstance of the individual process. A finer particle size is generally preferred as it provides a larger surface area for the heat and chemical reactions to occur, facilitating a more uniform and complete activation. However, the particle size should not be excessively fine as it can lead to operational challenges like dusting or handling difficulties. The optimal particle size is typically determined through a balance between maximizing reactivity and practical considerations related to processing and handling in the specific calcination system being used. Preferably, the particle size of the calcium silicate mineral material when being subjected to the activation step is in the range of 50 micrometers to 8 millimeters, preferably 1 to 4 mm. This selection of particle sizes allows to reduce the amount of dust that is generated during the introduction of the calcium silicate mineral material in the clinker cooler.

The calcium silicate mineral material can be selected from concrete demolition materials, recycled cement paste, concrete sludges from ready-mix concrete production plants, concrete waste from precast plants, or mixtures thereof.

Preferably, concrete demolition materials or recycled concrete paste is used as said calcium silicate mineral material. The concrete demolition material may preferably comprise at least 10 wt.-% cement paste, preferably 20 wt.-%, even more preferably 30 wt.-%. This substantial proportion of cement paste that constitutes the final activated material retains a high content of calcium silicates, which are essential for the pozzolanic reaction in cementitious applications.

Construction demolition materials, or concrete demolition waste materials, are a mixture of different materials that come from the demolition site of an old construction. It is typically composed of concrete demolition wastes, plasterboards, bricks, steel, wood, tiles or glass. The common practice is to sort these materials in recycling centers, so as to separate the materials listed above to reuse them in applications for which their chemical composition is most suitable.

These demolition wastes are classified under different waste codes of the European Waste Catalog (EWC) depending on its composition and potential contamination. The EWC is a hierarchical list of waste descriptions established by EU Commission decision 2000/532/EC2. Construction and demolition wastes fall under chapter 17 of the EWC. Concrete demolition wastes fall under sub-chapter 17 01 und comprises the following waste codes:
- 17 01 01: concrete
- 17 01 02: bricks
- 17 01 03: tiles and ceramics
- 17 01 06: mixtures of, or separate fractions of concrete, bricks, tiles and ceramics containing hazardous substances
- 17 01 07: mixtures of concrete, bricks, tiles and ceramics other than those mentioned in 17 01 06

Other sub-chapters comprise wood, glass and plastic (17 02), bituminous mixtures, coal tar and tarred products (17 03), metals (17 04), soil (17 05), and other fractions (17 06 - 17 09).

For the purpose of the instant invention, concrete demolition waste according to EWC waste code 17 01, in particular 17 01 01 and/or 17 01 07, may be used as the calcium silicate mineral material.

Preferably, the calcium silicate mineral material comprises a water content of 2-25 wt.-% of the total weight of the calcium silicate mineral material. In case the calcium silicate mineral material has a humidity above 25 wt.-%, waste heat from the cement process can be used to reduce the amount of water in the material before the material is being introduced into the clinker cooler. Also, the water should preferably be above 5 wt.-% of the amount of the calcium silicate mineral material to ensure that the occurrence of dust during the process of adding the material onto the hot clinker bed is minimized.

Thermally activating the calcium silicate mineral material in the clinker cooler of a cement manufacturing plant, in particular by being contacted with the clinker bed, advantageously results in that the reactive material is obtained in combination with the cement clinker. Therefore, a preferred embodiment of the invention provides that a combined material comprising the cement clinker and the reactive material is discharged from a discharge end of the clinker cooler. The combined material results in environmental benefits due to the reactive material's ability to substitute a portion of the cement clinker, effectively reducing the carbon footprint of the cement.

The combined material may later be ground, with a source of calcium sulfates and other optional mineral components to form a composite Portland cement. Calcium sulfate serves as a setting time regulator for the hydrated cement in a concentration of 1-10 wt.-%. Since clinker sets quickly, the addition of calcium sulfate lengthens the setting time of the cement in proportion to its increase in the composite cement.

In a preferred embodiment, calcium carbonate may be added as an additional component to the composite cement in an amount of 1-35 wt.-% of the total weight of the composite cement.

According to a second aspect, the present invention provides a method of producing a composite cement containing cement clinker and a reactive material in a cement manufacturing plant comprising a cement kiln and a clinker cooler, a head region of the clinker cooler being connected to an outlet end of the cement kiln for cooling cement clinker coming from the cement kiln, the method comprising:
- calcining cement clinker in the cement kiln,
- discharging cement clinker from the cement kiln into the clinker cooler and cooling the cement clinker in the clinker cooler
- producing a reactive material by a method according to the first aspect of the invention, wherein the material is contacted with the cement clinker present in the clinker cooler,
- discharging a combined material comprising the cement clinker and the reactive material from the clinker cooler,
- grinding the mixture in a cement mill together with a source of calcium sulfates in order to obtain said composite cement.

Preferably, the composite cement further comprises calcium carbonate, preferably in an amount of 1-35 wt.-% of the total weight of the composite cement.

Preferably, the composite cement further comprises a supplementary cementitious material, such as a natural pozzolan, fly ash, granulated blast furnace slag and/or a silica-aluminous natural or artificial mineral having pozzolanic activity.

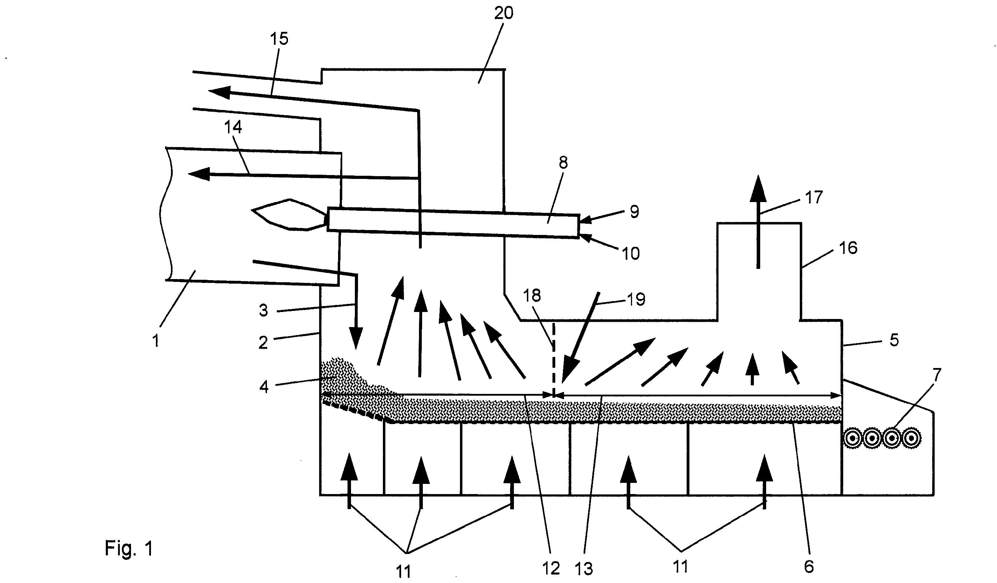

The invention will now be described in more detail with reference to an exemplary embodiment shown in Fig 1.

Fig. 1 shows the outlet end of a cement kiln 1, such as a rotary kiln, for calcining cement clinker. Cement clinker is discharged from the cement kiln 1 into the clinker cooler 2, as illustrated by arrow 3 and forms a clinker bed 4 that is conveyed through the clinker cooler 2 by means of moving grates 6 to a discharge end 5, from where the clinker falls onto a conveyor 7 for being further transported to a storage facility.

A burner for providing thermal energy to the cement kiln 1 is denoted by reference numeral 8, to which fuel 9 and primary air 10 are fed.

For cooling the cement clinker, ambient air is blown into the clinker cooler 2 by means of a plurality of fans 11 that are distributed over the length of the clinker cooler 2. Cooling air is blown through the grates 6 from beneath and passes through the clinker bed 4, thereby cooling the cement clinker and increasing the temperature of the cooling air. The clinker cooler comprises a recuperation zone 12 adjacent the outlet end of the cement kiln 1, in which incoming cooling air is heated by the cement clinker and heated cooling air is fed into the cement kiln 1 via the head region 20 as secondary air 14 and/or used as tertiary air 15, and a cooling zone 13 remote from the outlet end, in which incoming cooling air is used to cool the cement clinker and exhaust air 17 is released from the clinker cooler 2 through an exhaust duct 16. The zero point 18 of the clinker cooler 2 is located at the beginning of the cooling zone 13. As illustrated by arrows pointing upwards, the flow of cooling air in the recuperation zone 12 is directed to the head region 20 of the cooler, and the flow of cooling air in the cooling zone 13 is directed to the exhaust duct 16.

A calcium silicate mineral material susceptible of becoming reactive upon thermal treatment, such a concrete demolition waste, is introduced into the cooling zone 13 of the clinker cooler 2, as illustrated by the arrow 18, in order to thermally activate the calcium silicate mineral material at a temperature of 600-900°C. The introduction point of the calcium silicate mineral material 19 is located approximately 10-20 cm above the clinker bed 4. In this way, the calcium silicate mineral material 19 gets into contact with the clinker bed 4 and is heated to a temperature of 600-900°C in order to get thermally activated. The activated material is entrained by the moving clinker bed 4 and conveyed to the discharge end 5. Therefore, as a result of the method described, a combined product containing cement clinker and a reactive material is obtained.

## Claims

1. Method of producing a reactive material in a cement manufacturing plant comprising a cement kiln (1) and a clinker cooler (2), a head region (20) of the clinker cooler (2) being connected to an outlet end of the cement kiln (1) for cooling cement clinker coming from the cement kiln (1), the method comprising:
- providing a calcium silicate mineral material susceptible of becoming reactive upon thermal treatment,
- introducing the calcium silicate mineral material into the clinker cooler (2) and thermally activating the calcium silicate mineral material in the clinker cooler (2) at a temperature of 600-900°C, in order to obtain said reactive material,
wherein the clinker cooler (2) comprises a recuperation zone (12) adjacent the outlet end, in which incoming cooling air is heated by the cement clinker (4) and heated cooling air is fed into the cement kiln (1) via the head region (20) as secondary air (14) and/or used as tertiary air (15), and a cooling zone (13) remote from the outlet end, in which incoming cooling air is used to cool the cement clinker (4) and exhaust air is released from the clinker cooler (2) through an exhaust duct (16), and wherein the calcium silicate mineral material is introduced into the cooling zone (13) of the clinker cooler (2) and thermally activated in the cooling zone (13).

2. Method according to claim 1, wherein the calcium silicate mineral material is introduced into the clinker cooler (2) at an upstream end region of the cooling zone (13).

3. Method according to claim 1 or 2, wherein the calcium silicate mineral material is introduced into the clinker cooler (2), preferably the cooling zone (13), at a vertical distance of 10-20 cm above a bed (4) of cement clinker (4) being conveyed through the clinker cooler (2).

4. Method according to any one of claims 1 to 3, wherein the clinker cooler (2) is designed as a grate cooler.

5. Method according to any one of claims 1 to 4, wherein the clinker cooler (2) is designed as a single-chamber cooler and the calcium silicate mineral material is introduced into the clinker cooler (2) at the zero point (18) of the clinker cooler (2).

6. Method according to any one of claims 1 to 4, wherein the clinker cooler (2) comprises two or more consecutive cooling chambers and the calcium silicate mineral material is introduced into a second cooling chamber arranged downstream of a first cooling chamber, wherein the calcium silicate mineral material is preferably introduced at an upstream end of the second cooling chamber.

7. Method according to any one of claims 1 to 6, wherein the calcium silicate mineral material is introduced into the clinker cooler (2), preferably the cooling zone (13), by means of an air-tight dosing system.

8. Method according to any one of claims 1 to 7, wherein the calcium silicate mineral material is introduced into the clinker cooler (2), preferably the cooling zone (13), by means of a rotary valve or a feeding screw.

9. Method according to any one of claims 1 to 8, wherein the calcium silicate mineral material is introduced into the clinker cooler (2), preferably the cooling zone (13), at a dosing rate of 0,5-20 wt.-%, preferably 1-10 wt.-%, of the cement clinker (4).

10. Method according to any one of claims 1 to 9, wherein a first temperature of the cement clinker (4) is measured upstream of the cooling zone (13) and a second temperature of the cement clinker (4) is measured at a discharge end (5) of the clinker cooler (2) and a feeding rate of the calcium silicate mineral material introduced into the clinker cooler (2) is controlled as a function of said first and second temperature so that calcium silicate mineral material is heated to a temperature of at least 600°C and not above 900°C.

11. Method according to any one of claims 1 to 10, wherein concrete demolition waste or hardened cement paste is used as said calcium silicate mineral material.

12. Method according to any one of claims 1 to 11, wherein the calcium silicate mineral material comprises a water content of 2-25 wt.-% of the total weight of the calcium silicate mineral material.

13. Method according to any one of claims 1 to 12, wherein a mixture comprising the cement clinker (4) and the reactive material is discharged from a discharge end (5) of the clinker cooler (2).

14. Method according to any one of claims 1 to 13, further comprising:
- calcining cement clinker in the cement kiln (1),
- discharging cement clinker from the cement kiln (1) into the clinker cooler (2) and cooling the cement clinker (4) in the clinker cooler (2)
- contacting the reactive material with the cement clinker (4) present in the clinker cooler (2),
- discharging a combined material comprising the cement clinker (4) and the reactive material from the clinker cooler (2),
- grinding the mixture in a cement mill together with a source of calcium sulfates in order to obtain said composite cement.

15. Method according to claim 14, wherein the composite cement further comprises calcium carbonate, preferably in an amount of 1-35 wt.-% of the total weight of the composite cement.

16. Method according to claim 14 or 15, wherein the composite cement further comprises a further supplementary cementitious material, such as a natural pozzolan, fly ash, granulated blast furnace slag, calcined clay and/or a silica-aluminous natural or artificial mineral having pozzolanic activity.

## Patentansprüche

1. Verfahren zur Herstellung eines reaktiven Materials in einer Zementherstellungsanlage, umfassend einen Zementofen (1) und einen Klinkerkühler (2), wobei ein Kopfbereich (20) des Klinkerkühlers (2) mit einem Auslassende des Zementofens (1) zum Kühlen von aus dem Zementofen (1) kommendem Zementklinker verbunden ist, wobei das Verfahren umfasst:
- Bereitstellen eines Calciumsilicat-Mineralmaterials, das geeignet ist, bei thermischer Behandlung reaktiv zu werden,
- Einbringen des Calciumsilicat-Mineralmaterials in den Klinkerkühler (2) und thermisches Aktivieren des Calciumsilicat-Mineralmaterials im Klinkerkühler (2) bei einer Temperatur von 600-900 °C, um das besagte reaktive Material zu erhalten,
wobei der Klinkerkühler (2) eine Rekuperationszone (12) angrenzend an das Auslassende umfasst, in welcher eintretende Kühlluft durch den Zementklinker (4) erwärmt wird und erwärmte Kühlluft über den Kopfbereich (20) als Sekundärluft (14) in den Zementofen (1) eingespeist und/oder als Tertiärluft (15) verwendet wird, und eine von dem Auslassende entfernte Kühlzone (13), in welcher eintretende Kühlluft verwendet wird, um den Zementklinker (4) zu kühlen, und Abluft aus dem Klinkerkühler (2) durch einen Abluftkanal (16) abgeführt wird, und wobei das Calciumsilicat-Mineralmaterial in die Kühlzone (13) des Klinkerkühlers (2) eingebracht und in der Kühlzone (13) thermisch aktiviert wird.

2. Verfahren nach Anspruch 1, wobei das Calciumsilicat-Mineralmaterial an einem stromaufwärtigen Endbereich der Kühlzone (13) in den Klinkerkühler (2) eingebracht wird.

3. Verfahren nach Anspruch 1 oder 2, wobei das Calciumsilicat-Mineralmaterial in einem vertikalen Abstand von 10-20 cm über einem Bett (4) aus Zementklinker (4), das durch den Klinkerkühler (2) gefördert wird, in den Klinkerkühler (2), vorzugsweise die Kühlzone (13), eingebracht wird.

4. Verfahren nach einem der Ansprüche 1 bis 3, wobei der Klinkerkühler (2) als Rostkühler ausgebildet ist.

5. Verfahren nach einem der Ansprüche 1 bis 4, wobei der Klinkerkühler (2) als Einkammer-Kühler ausgebildet ist und das Calciumsilicat-Mineralmaterial am Nullpunkt (18) des Klinkerkühlers (2) in den Klinkerkühler (2) eingebracht wird.

6. Verfahren nach einem der Ansprüche 1 bis 4, wobei der Klinkerkühler (2) zwei oder mehr aufeinanderfolgende Kühlkammern umfasst und das Calciumsilicat-Mineralmaterial in eine stromabwärts einer ersten Kühlkammer angeordnete zweite Kühlkammer eingebracht wird, wobei das Calciumsilicat-Mineralmaterial vorzugsweise an einem stromaufwärtigen Ende der zweiten Kühlkammer eingebracht wird.

7. Verfahren nach einem der Ansprüche 1 bis 6, wobei das Calciumsilicat-Mineralmaterial mittels eines luftdichten Dosiersystems in den Klinkerkühler (2), vorzugsweise die Kühlzone (13), eingebracht wird.

8. Verfahren nach einem der Ansprüche 1 bis 7, wobei das Calciumsilicat-Mineralmaterial mittels einer Zellradschleuse oder einer Förderschnecke in den Klinkerkühler (2), vorzugsweise die Kühlzone (13), eingebracht wird.

9. Verfahren nach einem der Ansprüche 1 bis 8, wobei das Calciumsilicat-Mineralmaterial mit einer Dosierrate von 0,5-20 Gew.- %, vorzugsweise 1-10 Gew.-%, des Zementklinkers (4) in den Klinkerkühler (2), vorzugsweise die Kühlzone (13), eingebracht wird.

10. Verfahren nach einem der Ansprüche 1 bis 9, wobei eine erste Temperatur des Zementklinkers (4) stromaufwärts der Kühlzone (13) gemessen wird und eine zweite Temperatur des Zementklinkers (4) an einem Austragsende (5) des Klinkerkühlers (2) gemessen wird und eine Zuführrate des in den Klinkerkühler (2) eingebrachten Calciumsilicat-Mineralmaterials in Abhängigkeit von der ersten und der zweiten Temperatur gesteuert wird, so dass das Calciumsilicat-Mineralmaterial auf eine Temperatur von mindestens 600 °C und nicht über 900 °C erwärmt wird.

11. Verfahren nach einem der Ansprüche 1 bis 10, wobei Betonabbruchabfall oder Zementstein als das besagte Calciumsilicat-Mineralmaterial verwendet wird.

12. Verfahren nach einem der Ansprüche 1 bis 11, wobei das Calciumsilicat-Mineralmaterial einen Wassergehalt von 2-25 Gew.-% des Gesamtgewichts des Calciumsilicat-Mineralmaterials aufweist.

13. Verfahren nach einem der Ansprüche 1 bis 12, wobei ein Gemisch, umfassend den Zementklinker (4) und das reaktive Material, aus einem Austragsende (5) des Klinkerkühlers (2) ausgetragen wird.

14. Verfahren nach einem der Ansprüche 1 bis 13, ferner umfassend:
- Kalzinieren von Zementklinker im Zementofen (1),
- Austragen von Zementklinker aus dem Zementofen (1) in den Klinkerkühler (2) und Kühlen des Zementklinkers (4) im Klinkerkühler (2),
- Inkontaktbringen des reaktiven Materials mit dem im Klinkerkühler (2) vorhandenen Zementklinker (4),
- Austragen eines kombinierten Materials, umfassend den Zementklinker (4) und das reaktive Material, aus dem Klinkerkühler (2),
- Mahlen des Gemisches in einer Zementmühle zusammen mit einer Calciumsulfatquelle, um den besagten Kompositzement zu erhalten.

15. Verfahren nach Anspruch 14, wobei der Kompositzement ferner Calciumcarbonat umfasst, vorzugsweise in einer Menge von 1-35 Gew.-% des Gesamtgewichts des Kompositzements.

16. Verfahren nach Anspruch 14 oder 15, wobei der Kompositzement ferner ein weiteres Zementzusatzmaterial umfasst, wie beispielsweise ein natürliches Puzzolan, Flugasche, granulierte Hochofenschlacke, kalzinierten Ton und/oder ein siliko-aluminatisches natürliches oder künstliches Mineral mit puzzolanischer Aktivität.

## Revendications

1. Procédé de production d'un matériau réactif dans une installation de fabrication de ciment comprenant un four à ciment (1) et un refroidisseur de clinker (2), une région de tête (20) du refroidisseur de clinker (2) étant raccordée à une extrémité de sortie du four à ciment (1) pour refroidir du clinker de ciment provenant du four à ciment (1), le procédé comprenant :
- la fourniture d'un matériau minéral de silicate de calcium susceptible de devenir réactif lors d'un traitement thermique,
- l'introduction du matériau minéral de silicate de calcium dans le refroidisseur de clinker (2) et l'activation thermique du matériau minéral de silicate de calcium dans le refroidisseur de clinker (2) à une température de 600-900 °C, afin d'obtenir ledit matériau réactif,
dans lequel le refroidisseur de clinker (2) comprend une zone de récupération (12) adjacente à l'extrémité de sortie, dans laquelle de l'air de refroidissement entrant est chauffé par le clinker de ciment (4) et de l'air de refroidissement chauffé est introduit dans le four à ciment (1) par l'intermédiaire de la région de tête (20) en tant qu'air secondaire (14) et/ou utilisé en tant qu'air tertiaire (15), et une zone de refroidissement (13) distante de l'extrémité de sortie, dans laquelle de l'air de refroidissement entrant est utilisé pour refroidir le clinker de ciment (4) et de l'air d'échappement est évacué du refroidisseur de clinker (2) à travers un conduit d'échappement (16), et dans lequel le matériau minéral de silicate de calcium est introduit dans la zone de refroidissement (13) du refroidisseur de clinker (2) et thermiquement activé dans la zone de refroidissement (13).

2. Procédé selon la revendication 1, dans lequel le matériau minéral de silicate de calcium est introduit dans le refroidisseur de clinker (2) au niveau d'une région d'extrémité amont de la zone de refroidissement (13).

3. Procédé selon la revendication 1 ou 2, dans lequel le matériau minéral de silicate de calcium est introduit dans le refroidisseur de clinker (2), de préférence la zone de refroidissement (13), à une distance verticale de 10-20 cm au-dessus d'un lit (4) de clinker de ciment (4) transporté à travers le refroidisseur de clinker (2).

4. Procédé selon l'une quelconque des revendications 1 à 3, dans lequel le refroidisseur de clinker (2) est conçu sous la forme d'un refroidisseur à grille.

5. Procédé selon l'une quelconque des revendications 1 à 4, dans lequel le refroidisseur de clinker (2) est conçu sous la forme d'un refroidisseur à chambre unique et le matériau minéral de silicate de calcium est introduit dans le refroidisseur de clinker (2) au point zéro (18) du refroidisseur de clinker (2).

6. Procédé selon l'une quelconque des revendications 1 à 4, dans lequel le refroidisseur de clinker (2) comprend deux chambres de refroidissement consécutives ou plus et le matériau minéral de silicate de calcium est introduit dans une deuxième chambre de refroidissement disposée en aval d'une première chambre de refroidissement, dans lequel le matériau minéral de silicate de calcium est de préférence introduit à une extrémité amont de la deuxième chambre de refroidissement.

7. Procédé selon l'une quelconque des revendications 1 à 6, dans lequel le matériau minéral de silicate de calcium est introduit dans le refroidisseur de clinker (2), de préférence la zone de refroidissement (13), au moyen d'un système de dosage étanche à l'air.

8. Procédé selon l'une quelconque des revendications 1 à 7, dans lequel le matériau minéral de silicate de calcium est introduit dans le refroidisseur de clinker (2), de préférence la zone de refroidissement (13), au moyen d'une vanne rotative ou d'une vis d'alimentation.

9. Procédé selon l'une quelconque des revendications 1 à 8, dans lequel le matériau minéral de silicate de calcium est introduit dans le refroidisseur de clinker (2), de préférence la zone de refroidissement (13), à un taux de dosage de 0,5-20 % en poids, de préférence de 1-10 % en poids, du clinker de ciment (4).

10. Procédé selon l'une quelconque des revendications 1 à 9, dans lequel une première température du clinker de ciment (4) est mesurée en amont de la zone de refroidissement (13) et une seconde température du clinker de ciment (4) est mesurée à une extrémité de décharge (5) du refroidisseur de clinker (2) et un débit d'alimentation du matériau minéral de silicate de calcium introduit dans le refroidisseur de clinker (2) est commandé en fonction desdites première et seconde températures de telle sorte que le matériau minéral de silicate de calcium soit chauffé à une température d'au moins 600 °C et ne dépassant pas 900 °C.

11. Procédé selon l'une quelconque des revendications 1 à 10, dans lequel des déchets de démolition de béton ou de la pâte de ciment durcie sont utilisés en tant que ledit matériau minéral de silicate de calcium.

12. Procédé selon l'une quelconque des revendications 1 à 11, dans lequel le matériau minéral de silicate de calcium comprend une teneur en eau de 2-25 % en poids du poids total du matériau minéral de silicate de calcium.

13. Procédé selon l'une quelconque des revendications 1 à 12, dans lequel un mélange comprenant le clinker de ciment (4) et le matériau réactif est déchargé d'une extrémité de décharge (5) du refroidisseur de clinker (2).

14. Procédé selon l'une quelconque des revendications 1 à 13, comprenant en outre :
- la calcination de clinker de ciment dans le four à ciment (1),
- la décharge de clinker de ciment depuis le four à ciment (1) dans le refroidisseur de clinker (2) et le refroidissement du clinker de ciment (4) dans le refroidisseur de clinker (2),
- la mise en contact du matériau réactif avec le clinker de ciment (4) présent dans le refroidisseur de clinker (2),
- la décharge d'un matériau combiné comprenant le clinker de ciment (4) et le matériau réactif depuis le refroidisseur de clinker (2),
- le broyage du mélange dans un broyeur à ciment conjointement avec une source de sulfates de calcium afin d'obtenir ledit ciment composite.

15. Procédé selon la revendication 14, dans lequel le ciment composite comprend en outre du carbonate de calcium, de préférence en une quantité de 1-35 % en poids du poids total du ciment composite.

16. Procédé selon la revendication 14 ou 15, dans lequel le ciment composite comprend en outre un matériau cimentaire supplémentaire additionnel, tel qu'une pouzzolane naturelle, des cendres volantes, du laitier granulé de haut fourneau, de l'argile calcinée et/ou un minéral naturel ou artificiel silico-alumineux présentant une activité pouzzolanique.
